# EUROPEAN PATENT SPECIFICATION

(11) **EP 4 512 634 B1**
(45) Date of publication and mention of the grant of the patent: **12.08.2026**
(21) Application number: 24192038.8
(22) Date of filing: 31.07.2024
(51) Int. Cl.: B60C 1/00, B60C 11/00

(54) **TIRE**
REIFEN
PNEUMATIQUE

(30) Priority: 23.08.2023 JP 2023135713
(43) Date of publication of application: 26.02.2025
(73) Proprietor: Sumitomo Rubber Industries, Ltd., Kobe-shi, Hyogo 651-0072 (JP)
(72) Inventor: TANAKA, Kouichirou, Kobe-shi, 651-0072 (JP)
(74) Representative: Manitz Finsterwald Patent- und Rechtsanwaltspartnerschaft mbB

(56) References cited:
- JP-B2- 4 410 505
- US-A1- 2022 063 334
- US-A1- 2022 203 769

## Description

### BACKGROUND OF THE INVENTION

### Field of the Invention

The present invention relates to a tire including a tread portion.

### Background Art

Conventionally, a tire including a tread portion composed of a plurality of rubber layers has been known. Japanese Laid-Open Patent Publication No. 2017-210044 proposes a pneumatic tire in which a rubber composition for a tread portion including a first layer, a second layer, and a third layer is specified.

However, in the tire of Japanese Laid-Open Patent Publication No. 2017-210044, if the thickness of the first rubber layer which greatly affects grip performance is increased, low fuel consumption performance tends to decrease, and thus, further improvement is required for achievement of both grip performance and low fuel consumption performance which have a trade-off relationship. JP 4 410505 B2 discloses a tread rubber including three layers comprising a base layer, an intermediate layer and a surface layer which are different to each another. Other tires including a plurality of layers are disclosed in US 2022/203769 A1 and US 2022/063334 A1.

The present invention has been made in view of the above circumstances, and a main object of the present invention is to provide a tire capable of achieving both grip performance and low fuel consumption performance.

### SUMMARY OF THE INVENTION

The present invention is directed to a tire including a tread portion, wherein the tread portion includes a first rubber layer forming a ground-contact surface, a second rubber layer located inward of the first rubber layer in a tire radial direction, and a third rubber layer located inward of the second rubber layer in the tire radial direction, a complex elastic modulus E*1 of the first rubber layer at 30°C is not greater than 8.5 MPa, a complex elastic modulus E*2 of the second rubber layer at 30°C is 80% to 90% of the complex elastic modulus E*1 of the first rubber layer, a complex elastic modulus E*3 of the third rubber layer at 30°C is 35% to 45% of the complex elastic modulus E*1 of the first rubber layer, and the first rubber layer includes first portions each having a thickness t1 that is 5% to 25% of a tread thickness T and a second portion having a thickness t2 that is 35% to 55% of the tread thickness T.

As a result of having the above-described configuration, the tire of the present invention can achieve both grip performance and low fuel consumption performance.

### BRIEF DESCRIPTION OF THE DRAWINGS

FIG. 1 is a sectional view of a tread portion of a tire according to one embodiment of the present invention;
FIG. 2 is a schematic view of the tread portion; and
FIG. 3 is a schematic view of a ground-contact surface.

### DETAILED DESCRIPTION

Hereinafter, an embodiment of the present invention will be described in detail with reference to the drawings.

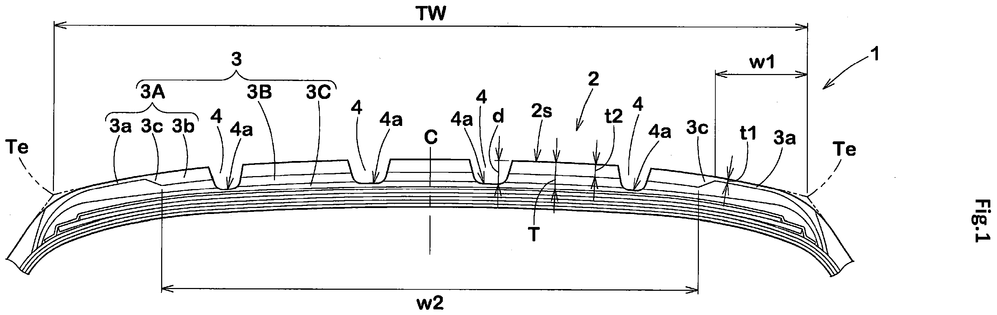

FIG. 1 is a tire meridional cross-sectional view of a tread portion 2 of a tire 1 in a standardized state according to the present embodiment. As shown in FIG. 1, the tire 1 of the present embodiment includes the tread portion 2. The tire 1 of the present embodiment is suitably used as a pneumatic tire to be mounted to a passenger car or the like. The tire 1 is not limited to a pneumatic tire for a passenger car, and is applicable as various tires such as a heavy-duty pneumatic tire, a motorcycle pneumatic tire, and an airless tire.

Here, in the case where the tire 1 is a pneumatic tire, the "standardized state" is a state where the tire 1 is mounted on a standardized rim and adjusted to a standardized internal pressure and no load is applied to the tire 1. Hereinafter, unless otherwise specified, dimensions and the like of components of the tire 1 are values measured in the standardized state.

If there is a standard system including a standard on which the tire 1 is based, the "standardized rim" is a rim that is defined for each tire by the standard, and is, for example, the "standard rim" in the JATMA standard, the "Design Rim" in the TRA standard, or the "Measuring Rim" in the ETRTO standard. If there is no standard system including a standard on which the tire 1 is based, the "standardized rim" is a rim having the smallest rim diameter and having the smallest rim width, among rims to which the tire 1 can be fitted and which do not cause air leakage.

If there is a standard system including a standard on which the tire 1 is based, the "standardized internal pressure" is an air pressure that is defined for each tire by each standard, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. If there is no standard system including a standard on which the tire 1 is based, the "standardized internal pressure" is an air pressure that is defined for each tire by the manufacturer or the like.

The tread portion 2 of the present embodiment has a ground-contact surface 2s extending between a pair of tread ends Te. Here, in the case where the tire 1 is a pneumatic tire, the pair of tread ends Te are outermost ground-contact positions in a tire axial direction when 70% of a standardized load is applied to the pneumatic tire in the standardized state and the pneumatic tire is brought into contact with a flat surface at a camber angle of 0°. The distance in the tire axial direction between the pair of tread ends Te is a ground-contact width TW. In addition, the center position in the tire axial direction between the pair of tread ends Te is a tire equator C.

If there is a standard system including a standard on which the tire 1 is based, the "standardized load" is a load that is defined for each tire by each standard, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. If there is no standard system including a standard on which the tire 1 is based, the "standardized load" is a load that is defined for each tire by the manufacturer or the like.

The tread portion 2 of the present embodiment includes a plurality of rubber layers 3. The plurality of rubber layers 3 include a first rubber layer 3A forming the ground-contact surface 2s, a second rubber layer 3B located inward of the first rubber layer 3A in a tire radial direction, and a third rubber layer 3C located inward of the second rubber layer 3B in the tire radial direction. The properties of the plurality of rubber layers 3 are made different, and thus such a tread portion 2 serves to achieve both grip performance and low fuel consumption performance.

A complex elastic modulus E*1 of the first rubber layer 3A at 30°C is preferably not greater than 8.5 MPa. Such a first rubber layer 3A can exhibit good heat generation properties, so that grip performance such as braking performance on a wet road surface can be improved. In addition, the first rubber layer 3A also serves to attain an object of improving on-snow performance. From the viewpoint of steering stability on a dry road surface, the complex elastic modulus E*1 of the first rubber layer 3A is preferably not less than 6.0 MPa.

Here, the complex elastic modulus is a value obtained by collecting, from each rubber layer 3, a sample having a length of 20 mm × a width of 4 mm × a thickness of 1 mm and measuring the sample by using a dynamic viscoelasticity measurement device (EPLEXOR series manufactured by NETZSCH-Gerätebau GmbH) in accordance with the standards of JIS-K6394 under the following conditions. The sample was collected so as to have a length in a tire circumferential direction, a width in the tire axial direction, and a thickness in the tire radial direction.
Initial strain: 5%
Dynamic strain: 1%
Frequency: 10 Hz
Deformation mode: stretch
Measurement temperature: 30°C

A complex elastic modulus E*2 of the second rubber layer 3B at 30°C is preferably 80% to 90% of the complex elastic modulus E*1 of the first rubber layer 3A. Such a second rubber layer 3B can further inhibit heat generation than the first rubber layer 3A, so that low fuel consumption performance can be improved.

A complex elastic modulus E*3 of the third rubber layer 3C at 30°C is preferably 35% to 45% of the complex elastic modulus E*1 of the first rubber layer 3A. Such a third rubber layer 3C in an inner region in the tire radial direction where heat is easily stored can further inhibit heat generation than the first rubber layer 3A and the second rubber layer 3B, so that low fuel consumption performance can be improved.

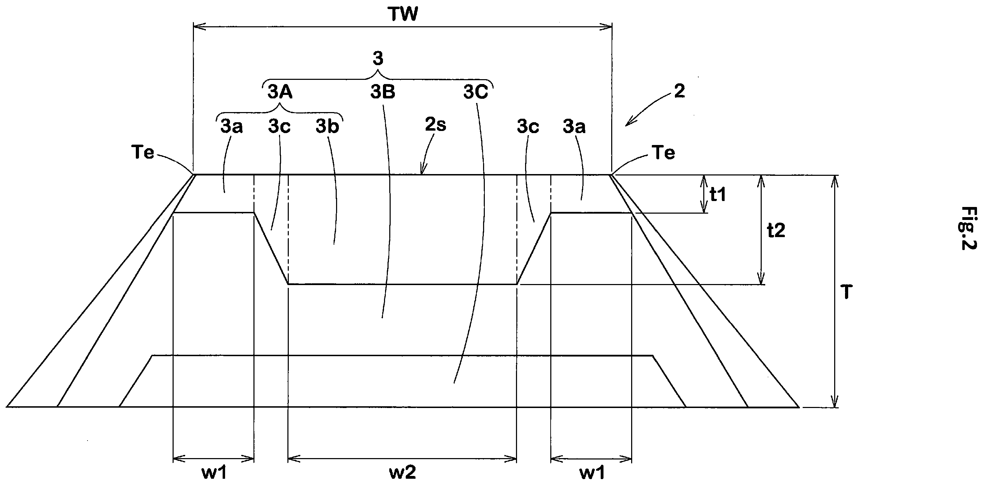

FIG. 2 is a schematic view of the tread portion 2. As shown in FIG. 1 and FIG. 2, the first rubber layer 3A includes first portions 3a each having a thickness t1 that is 5% to 25% of a tread thickness T and a second portion 3b having a thickness t2 that is 35% to 55% of the tread thickness T.

In such a tread portion 2, each first portion 3a is disposed at a position that greatly affects low fuel consumption performance and the second portion 3b is disposed at a position that greatly affects grip performance, so that both grip performance and low fuel consumption performance, which have a trade-off relationship, can be achieved at high levels. Thus, the tire 1 of the present embodiment can achieve both grip performance and low fuel consumption performance.

In a more preferable mode, the first rubber layer 3A includes third portions 3c each disposed between the first portion 3a and the second portion 3b. The thickness of each third portion 3c of the first rubber layer 3A is gradually increased from the thickness t1 of the first portion 3a to the thickness t2 of the second portion 3b, for example. Change in stress between each first portion 3a and the second portion 3b is alleviated by such third portions 3c, and an object of improving durability can also be attained.

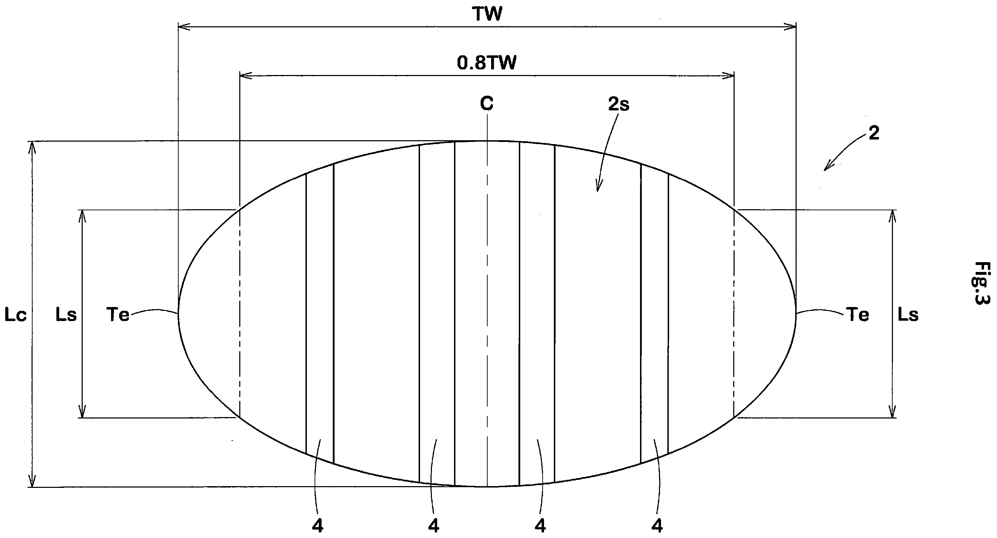

FIG. 3 is a schematic view of the ground-contact surface 2s. As shown in FIG. 3, in the ground-contact surface 2s of the present embodiment, a ground-contact length in the tire circumferential direction of a crown region around the tire equator C is large. In such a ground-contact surface 2s, the crown region has a large ground-contact area, and thus greatly affects grip performance such as braking performance on a wet road surface.

In the ground-contact surface 2s, a shoulder ground-contact length Ls at a position corresponding to 80% of the ground-contact width TW is preferably 65% to 95% of a crown ground-contact length Lc on the tire equator C. When the shoulder ground-contact length Ls is not less than 65% of the crown ground-contact length Lc, the compressive strain of shoulder regions during load application can be alleviated, and heat generation can be inhibited in the shoulder regions which easily generate heat and greatly affect low fuel consumption performance, which serves to improve low fuel consumption performance. When the shoulder ground-contact length Ls is not greater than 95% of the crown ground-contact length Lc, the large ground-contact area of the crown region can be ensured, which serves to improve grip performance.

As shown in FIG. 1 and FIG. 2, the first portions 3a of the present embodiment are located on both sides of the second portion 3b in the tire axial direction. In such a tread portion 2, the second portion 3b can be positioned around the tire equator C and the position thereof greatly affects grip performance, and the first portions 3a can be positioned on both sides of the second portion 3b and the positions thereof greatly affect low fuel consumption performance, so that both grip performance and low fuel consumption performance can be achieved.

Each first portion 3a is preferably located outward of a position defining 35% to 45% of the ground-contact width TW from the tire equator C in the tire axial direction. Such first portions 3a can increase the contribution of the second rubber layer 3B in the shoulder regions which greatly affect low fuel consumption performance, so that low fuel consumption performance can be improved.

A width w1 in the tire axial direction of each first portion 3a is preferably 5% to 20% of the ground-contact width TW. When the width w1 of the first portion 3a is not less than 5% of the ground-contact width TW, the first portions 3a can be assuredly positioned at the shoulder regions which greatly affect low fuel consumption performance. When the width w1 of the first portion 3a is not greater than 20% of the ground-contact width TW, the first rubber layer 3A in the second portion 3b can remain and excellent grip performance can be maintained, even if the first portion 3a disappears due to wear. For example, the first portions 3a may extend outward of the tread ends Te in the tire axial direction.

A width w2 in the tire axial direction of the second portion 3b is preferably 70% to 90% of the ground-contact width TW. When the width w2 of the second portion 3b is not less than 70% of the ground-contact width TW, the contribution of the first rubber layer 3A can be increased in a crown region which greatly affects grip performance, so that grip performance can be improved. When the width w2 of the second portion 3b is not greater than 90% of the ground-contact width TW, the contribution of the second rubber layer 3B can be increased in the shoulder regions which greatly affect low fuel consumption performance, so that low fuel consumption performance can be improved.

As shown in FIG. 1 and FIG. 3, the tread portion 2 has at least one circumferential groove 4 extending in the tire circumferential direction, and has four circumferential grooves 4 in the present embodiment. A groove depth d of each circumferential groove 4 is preferably 5.5 to 8.5 mm. When the groove depth d of the circumferential groove 4 is not less than 5.5 mm, excellent drainage performance is exhibited during running on a wet road surface, so that wet performance can be improved. When the groove depth d of the circumferential groove 4 is not greater than 8.5 mm, the tread thickness T of the tread portion 2 can be decreased, which serves to reduce the weight of the tread portion 2 to improve low fuel consumption performance.

A groove bottom 4a of each circumferential groove 4 is, for example, located at the third rubber layer 3C. In such a tread portion 2, the tread thickness T can be decreased, so that low fuel consumption performance can be improved. The position of the groove bottom 4a of the circumferential groove 4 is not limited to such a mode, and the groove bottom 4a may be located at the second rubber layer 3B, for example. In this case, the tread portion 2 can maintain good grip performance even if the circumferential groove 4 is worn until it disappears.

A loss tangent tanδ1 of the first rubber layer 3A at 30°C is preferably 0.20 to 0.25. When the loss tangent tanδ1 of the first rubber layer 3A is not less than 0.20, such a first rubber layer 3A can exhibit good heat generation properties, so that both grip performance such as braking performance on a wet road surface, and on-snow performance can be achieved. When the loss tangent tanδ1 of the first rubber layer 3A is not greater than 0.25, excessive heat generation is inhibited, which serves to improve low fuel consumption performance.

Here, the loss tangent is a value measured by the same method as the above-described complex elastic modulus. That is, the loss tangent is a value obtained by collecting, from each rubber layer 3, a sample having a length of 20 mm × a width of 4 mm × a thickness of 1 mm and measuring the sample by using a dynamic viscoelasticity measurement device (EPLEXOR series manufactured by NETZSCH-Gerätebau GmbH) in accordance with the standards of JIS-K6394 under the following conditions. The sample was collected so as to have a length in the tire circumferential direction, a width in the tire axial direction, and a thickness in the tire radial direction.
Initial strain: 5%
Dynamic strain: 1%
Frequency: 10 Hz
Deformation mode: stretch
Measurement temperature: 30°C

In the present embodiment, a loss tangent tanδ2 of the second rubber layer 3B at 30°C is less than the loss tangent tanδ1 of the first rubber layer 3A. Such a second rubber layer 3B can further inhibit heat generation than first rubber layer 3A, so that low fuel consumption performance can be improved.

The loss tangent tanδ2 of the second rubber layer 3B is preferably 60% to 80% of the loss tangent tanδ1 of the first rubber layer 3A. When the loss tangent tanδ2 of the second rubber layer 3B is not less than 60% of the loss tangent tanδ1 of the first rubber layer 3A, good grip performance can be maintained even if the second rubber layer 3B serves as the ground-contact surface 2s due to wear. When the loss tangent tanδ2 of the second rubber layer 3B is not greater than 80% of the loss tangent tanδ1 of the first rubber layer 3A, heat generation can be inhibited during load application, so that low fuel consumption performance can be improved.

Although the particularly preferred embodiment of the present invention has been described in detail above, the present invention is not limited to the above-described embodiment, and various modifications can be made to implement the present invention.

### EXAMPLES

Tires having the basic structure shown in FIG. 1 were produced as test tires on the basis of specifications in Table 1. Low fuel consumption performance and grip performance were tested using the produced test tires, and combined performance represented by the total thereof was evaluated. Main common specifications and test methods are as follows.

### <Common specifications>

Tire size: 255/50R20 109V XL
Rim size: 20×8.0J
Test vehicle: large-sized SUV

### <Low fuel consumption performance>

Each produced test tire was mounted to a rolling resistance testing machine, and a rolling resistance value was measured under the conditions that an air pressure was adjusted to be 250 kPa and a load of 8.09 kN was applied to the tire. The results are represented as indexes with the result of Comparative Example 1 being regarded as 100. A higher value indicates that the rolling resistance value is lower and the low fuel consumption performance is better.

### <Grip performance>

The produced test tires were mounted to the test vehicle. One test driver rode in the test vehicle, and a braking test on a wet road surface was performed. In addition, the braking distance was measured on a wet road surface in the same manner with the produced test tire in a 70% worn state. The results are represented as indexes with the result of Comparative Example 1 being regarded as 100. A higher value indicates that the braking distance is shorter and the grip performance is better.

The results of the tests are indicated in Table 1.

**[Table1]**

| | Comp. Ex. 1 | Comp. Ex. 2 | Comp. Ex. 3 | Comp. Ex. 4 | Comp. Ex. 5 | Ex. 1 | Ex. 2 | Ex. 3 |
|---|---|---|---|---|---|---|---|---|
| Complex elastic modulus E*1 of first rubber layer (MPa) | 8.5 | 8.5 | 8.5 | 8.5 | 9.5 | 8.5 | 8.5 | 8.5 |
| Complex elastic modulus E*2 of second rubber layer / complex elastic modulus E*1 of first rubber layer (%) | 90 | 90 | 90 | 90 | 100 | 90 | 90 | 90 |
| Complex elastic modulus E*3 of third rubber layer / complex elastic modulus E*1 of first rubber layer (%) | 40 | 40 | 40 | 40 | 30 | 40 | 40 | 40 |
| Loss tangent tanδ1 of first rubber layer | 0.20 | 0.20 | 0.20 | 0.20 | 0.27 | 0.20 | 0.20 | 0.20 |
| Thickness t1 of first portion / tread thickness T (%) | 15 | 45 | 0 | 5 | 5 | 5 | 25 | 5 |
| Thickness t2 of second portion / tread thickness T (%) | 15 | 45 | 45 | 30 | 45 | 45 | 45 | 35 |
| Low fuel consumption performance (index) | 100 | 98 | 100 | 99 | 98 | 100 | 99 | 99 |
| Grip performance (index) | 100 | 100 | 95 | 100 | 100 | 100 | 100 | 100 |
| Grip performance in 70% worn state (index) | 75 | 90 | 90 | 75 | 90 | 93 | 90 | 90 |
| Combined performance (index) | 275 | 288 | 285 | 274 | 288 | 293 | 289 | 289 |

As a result of the tests, it is confirmed that the tire of each Example has better combined performance evaluated by the total of low fuel consumption performance, grip performance, and grip performance in a 70% wear state than those of the Comparative Examples, and achieves both grip performance and low fuel consumption performance.

The present invention is as claimed.

## Claims

1. A tire (1) comprising a tread portion (2), wherein
the tread portion (2) includes a first rubber layer (3A) forming a ground-contact surface (2s), a second rubber layer (3B) located inward of the first rubber layer (3A) in a tire radial direction, and a third rubber layer (3C) located inward of the second rubber layer (3B) in the tire radial direction,
a complex elastic modulus (E*1) of the first rubber layer (3A) at 30°C is not greater than 8.5 MPa,
a complex elastic modulus (E*2) of the second rubber layer (3B) at 30°C is 80% to 90% of the complex elastic modulus (E*1) of the first rubber layer (3A),
a complex elastic modulus (E*3) of the third rubber layer (3C) at 30°C is 35% to 45% of the complex elastic modulus (E*1) of the first rubber layer (3A),
wherein the complex elastic modulus E* is obtained in accordance with JIS-K6394 under:
Initial strain: 5%,
Dynamic strain: 1%,
Frequency: 10 Hz,
Deformation mode: stretch,
Measurement temperature: 30°C
and
the first rubber layer (3A) includes first portions (3a) each having a thickness (t1) that is 5% to 25% of a tread thickness (T) and a second portion (3b) having a thickness (t2) that is 35% to 55% of the tread thickness (T).

2. The tire (1) according to claim 1, wherein the first portions (3a) are located on both sides of the second portion (3b) in a tire axial direction.

3. The tire (1) according to claim 1 or 2, wherein each first portion (3a) is located outward of a position defining 35% to 45% of a ground-contact width (TW) from a tire equator (C) in the tire axial direction.

4. The tire (1) according to any one of claims 1 to 3, wherein a width w2 in the tire axial direction of the second portion (3b) is 70% to 90% of the ground-contact width (TW).

5. The tire (1) according to any one of claims 1 to 4, wherein in the ground-contact surface (2s), a shoulder ground-contact length (Ls) at a position corresponding to 80% of the ground-contact width (TW) is 65% to 95% of a crown ground-contact length (Lc) on the tire equator (C).

6. The tire (1) according to any one of claims 1 to 5, wherein
the tread portion (2) includes at least one circumferential groove (4) extending in a tire circumferential direction, and
a groove depth (d) of the circumferential groove (4) is 5.5 to 8.5 mm.

7. The tire (1) according to claim 6, wherein a groove bottom (4a) of the circumferential groove (4) is located at the third rubber layer (3C).

8. The tire (1) according to any one of claims 1 to 7, wherein a loss tangent (tanδ1) of the first rubber layer (3A) determined in accordance with the standards of JIS-K6394 under:
Initial strain: 5%,
Dynamic strain: 1%,
Frequency: 10 Hz,
Deformation mode: stretch,
at a measurement temperature: 30°C
is 0.20 to 0.25.

9. The tire (1) according to claim 8, wherein a loss tangent (tanδ2) of the second rubber layer (3B) at 30°C is less than the loss tangent (tanδ1) of the first rubber layer (3A).

10. The tire (1) according to claim 9, wherein the loss tangent (tanδ2) of the second rubber layer (3B) is 60% to 80% of the loss tangent (tanδ1) of the first rubber layer (3A).

## Patentansprüche

1. Reifen (1), der einen Laufflächenabschnitt (2) umfasst, wobei
der Laufflächenabschnitt (2) eine erste Gummischicht (3A), die eine Bodenkontaktfläche (2s) bildet, eine zweite Gummischicht (3B), die sich in einer Reifenradialrichtung innen von der ersten Gummischicht (3A) befindet, und eine dritte Gummischicht (3C), die sich in der Reifenradialrichtung innen von der zweiten Gummischicht (3B) befindet, umfasst,
ein komplexer Elastizitätsmodul (E*1) der ersten Gummischicht (3A) bei 30 °C nicht größer als 8,5 MPa ist,
ein komplexer Elastizitätsmodul (E*2) der zweiten Gummischicht (3B) bei 30 °C 80 % bis 90 % des komplexen Elastizitätsmoduls (E*1) der ersten Gummischicht (3A) beträgt,
ein komplexer Elastizitätsmodul (E*3) der dritten Gummischicht (3C) bei 30 °C 35 % bis 45 % des komplexen Elastizitätsmoduls (E*1) der ersten Gummischicht (3A) beträgt,
wobei der komplexe Elastizitätsmodul E* gemäß JIS-K6394 erhalten wird unter
Anfangsdehnung: 5 %
dynamische Dehnung: 1 %
Frequenz: 10 Hz
Verformungsmodus: Dehnung
Messtemperatur: 30 °C
und
die erste Gummischicht (3A) erste Abschnitte (3a), die jeweils eine Dicke (t1) aufweisen, die 5 % bis 25 % einer Laufflächendicke (T) beträgt, und einen zweiten Abschnitt (3b), der eine Dicke (t2) aufweist, die 35 % bis 55 % der Laufflächendicke (T) beträgt, umfasst.

2. Reifen (1) nach Anspruch 1, wobei sich die ersten Abschnitte (3a) in einer Reifenaxialrichtung auf beiden Seiten des zweiten Abschnitts (3b) befinden.

3. Reifen (1) nach Anspruch 1 oder 2, wobei sich jeder erste Abschnitt (3a) in der Reifenaxialrichtung außerhalb einer Position befindet, die 35 % bis 45 % einer Bodenkontaktbreite (TW) von einem Reifenäquator (C) definiert.

4. Reifen (1) nach einem der Ansprüche 1 bis 3, wobei eine Breite w2 des zweiten Abschnitts (3b) in der Reifenaxialrichtung 70 % bis 90 % der Bodenkontaktbreite (TW) beträgt.

5. Reifen (1) nach einem der Ansprüche 1 bis 4, wobei in der Bodenkontaktfläche (2s) eine Schulter-Boden-Kontaktlänge (Ls) an einer Position, die 80 % der Boden-Kontaktbreite (TW) entspricht, 65 % bis 95 % einer Kronen-Boden-Kontaktlänge (Lc) auf dem Reifenäquator (C) beträgt.

6. Reifen (1) nach einem der Ansprüche 1 bis 5, wobei
der Laufflächenabschnitt (2) mindestens eine Umfangsrille (4) umfasst, die sich in einer Reifenumfangsrichtung erstreckt, und
eine Rillentiefe (d) der Umfangsrille (4) 5,5 bis 8,5 mm beträgt.

7. Reifen (1) nach Anspruch 6, wobei sich ein Rillenboden (4a) der Umfangsrille (4) an der dritten Gummischicht (3C) befindet.

8. Reifen (1) nach einem der Ansprüche 1 bis 7, wobei ein Verlusttangens (tanδ1) der ersten Gummischicht (3A), der gemäß den Normen von JIS-K6394 bestimmt wird unter
Anfangsdehnung: 5 %
dynamische Dehnung: 1 %
Frequenz: 10 Hz
Verformungsmodus: Dehnung
bei einer Messtemperatur: 30 °C
0,20 bis 0,25
beträgt.

9. Reifen (1) nach Anspruch 8, wobei ein Verlusttangens (tanδ2) der zweiten Gummischicht (3B) bei 30 °C kleiner als der Verlusttangens (tanδ1) der ersten Gummischicht (3A) ist.

10. Reifen (1) nach Anspruch 9, wobei der Verlusttangens (tanδ2) der zweiten Gummischicht (3B) 60 % bis 80 % des Verlusttangens (tanδ1) der ersten Gummischicht (3A) beträgt.

## Revendications

1. Pneumatique (1) comprenant une portion de bande de roulement (2), dans lequel
la portion de bande de roulement (2) comprend une première couche de caoutchouc (3A) formant une surface de contact au sol (2s), une deuxième couche de caoutchouc (3B) située à l'intérieur de la première couche de caoutchouc (3A) dans une direction radiale du pneumatique, et une troisième couche de caoutchouc (3C) située à l'intérieur de la deuxième couche de caoutchouc (3B) dans la direction radiale du pneumatique,
un module d'élasticité complexe (E*1) de la première couche de caoutchouc (3A) à 30 °C n'est pas supérieur à 8,5 MPa,
un module d'élasticité complexe (E*2) de la deuxième couche de caoutchouc (3B) à 30 °C représente 80 % à 90 % du module d'élasticité complexe (E*1) de la première couche de caoutchouc (3A),
un module d'élasticité complexe (E*3) de la troisième couche de caoutchouc (3C) à 30 °C représente 35 % à 45 % du module d'élasticité complexe (E*1) de la première couche de caoutchouc (3A),
le module d'élasticité complexe E* étant obtenu conformément à JIS-K6394 sous
contrainte initiale : 5 %
contrainte dynamique : 1 %
fréquence : 10 Hz
mode de déformation : étirement
température de mesure : 30 °C,
et
la première couche de caoutchouc (3A) comprend des premières parties (3a) ayant chacune une épaisseur (t1) qui représente 5 % à 25 % d'une épaisseur de bande de roulement (T) et une deuxième partie (3b) ayant une épaisseur (t2) qui représente 35 % à 55 % de l'épaisseur de bande de roulement (T).

2. Pneumatique (1) selon la revendication 1, dans lequel les premières parties (3a) sont situées des deux côtés de la deuxième partie (3b) dans une direction axiale du pneumatique.

3. Pneumatique (1) selon la revendication 1 ou 2, dans lequel chaque première partie (3a) est située à l'extérieur d'une position définissant 35 % à 45 % d'une largeur de contact au sol (TW) à partir d'un équateur du pneumatique (C) dans la direction axiale du pneumatique.

4. Pneumatique (1) selon l'une quelconque des revendications 1 à 3, dans lequel une largeur w2 dans la direction axiale du pneumatique de la deuxième partie (3b) représente 70 % à 90 % de la largeur de contact au sol (TW).

5. Pneumatique (1) selon l'une quelconque des revendications 1 à 4, dans lequel, dans la surface de contact au sol (2s), une longueur de contact au sol d'épaulement (Ls) à une position correspondant à 80 % de la largeur de contact au sol (TW) représente 65 % à 95 % d'une longueur de contact au sol de couronne (Lc) sur l'équateur du pneumatique (C).

6. Pneumatique (1) selon l'une quelconque des revendications 1 à 5, dans lequel
la portion de bande de roulement (2) comprend au moins une rainure circonférentielle (4) s'étendant dans une direction circonférentielle du pneumatique, et
une profondeur de rainure (d) de la rainure circonférentielle (4) est de 5,5 à 8,5 mm.

7. Pneumatique (1) selon la revendication 6, dans lequel un fond de rainure (4a) de la rainure circonférentielle (4) est situé au niveau de la troisième couche de caoutchouc (3C).

8. Pneumatique (1) selon l'une quelconque des revendications 1 à 7, dans lequel une tangente de perte (tanδ1) de la première couche de caoutchouc (3A), déterminée conformément aux normes de JIS-K6394 sous
contrainte initiale : 5 %
contrainte dynamique : 1 %
fréquence : 10 Hz
mode de déformation : étirement
à une température de mesure : 30 °C,
est de 0,20 à 0,25.

9. Pneumatique (1) selon la revendication 8, dans lequel une tangente de perte (tanδ2) de la deuxième couche de caoutchouc (3B) à 30 °C est inférieure à la tangente de perte (tanδ1) de la première couche de caoutchouc (3A).

10. Pneumatique (1) selon la revendication 9, dans lequel la tangente de perte (tanδ2) de la deuxième couche de caoutchouc (3B) représente 60 % à 80 % de la tangente de perte (tanδ1) de la première couche de caoutchouc (3A).
